(19) Europäisches Patentamt / European Patent Office / Office européen des brevets

(11) **EP 4 076 701 B1**

(12) **EUROPEAN PATENT SPECIFICATION**

(45) Date of publication and mention of the grant of the patent:
**17.07.2024 Bulletin 2024/29**

(21) Application number: **21846455.0**

(22) Date of filing: **22.07.2021**

(51) International Patent Classification (IPC):
**B01D 53/02** (2006.01)    **B01J 20/00** (2006.01)
**B01D 53/62** (2006.01)

(52) Cooperative Patent Classification (CPC):
**B01D 53/0462; B01D 53/02; B01D 53/0438;
B01D 53/0476; B01J 20/18; B01J 20/20;
B01J 20/262; B01J 20/3204; B01J 20/3206;
B01J 20/3251; B01J 20/3259; B01J 20/3272;
B01J 20/3433; B01J 20/3441; B01D 53/62; (Cont.)**

(86) International application number:
**PCT/US2021/042834**

(87) International publication number:
**WO 2022/020634 (27.01.2022 Gazette 2022/04)**

(54) **APPARATUS, METHOD AND SYSTEM FOR DIRECT AIR CAPTURE UTILIZING ELECTROMAGNETIC EXCITATION RADIATION DESORPTION OF SOLID AMINE SORBENTS TO RELEASE CARBON DIOXIDE**

VORRICHTUNG, VERFAHREN UND SYSTEM ZUR DIREKTEN LUFTABSCHEIDUNG UNTER VERWENDUNG ELEKTROMAGNETISCHER ANREGUNGSSTRAHLUNGSDESORPTION VON FESTEN AMINSORBENTIEN ZUR FREISETZUNG VON KOHLENDIOXID

APPAREIL, PROCÉDÉ ET SYSTÈME DE CAPTURE DIRECTE D'AIR UTILISANT UNE DÉSORPTION PAR RAYONNEMENT D'EXCITATION ÉLECTROMAGNÉTIQUE DE SORBANTS AMINE SOLIDE POUR LIBÉRER DU DIOXYDE DE CARBONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.07.2020 US 202063055285 P**

(43) Date of publication of application:
**26.10.2022 Bulletin 2022/43**

(73) Proprietor: **Atwood, Matthew
Oakland, CA 94618 (US)**

(72) Inventor: **Atwood, Matthew
Oakland, CA 94618 (US)**

(74) Representative: **Schiweck Weinzierl Koch
Patentanwälte Partnerschaft mbB
Ganghoferstraße 68 B
80339 München (DE)**

(56) References cited:
CN-A- 110 813 017    CN-U- 210 773 301
JP-A- 2019 188 319    US-A1- 2006 051 274
US-A1- 2017 153 279    US-A1- 2018 169 613
US-B2- 8 784 532    US-B2- 9 504 989

• HAKAN NIGAR ET AL: "Amine-functionalized mesoporous silica: A material capable of CO2 adsorption and fast regeneration by microwave heating", AICHE JOURNAL, JOHN WILEY & SONS, INC, US, vol. NJ E62, no. 2, 15 December 2015 (2015-12-15), pages 547 - 555, XP071011574, ISSN: 0001-1541, DOI: 10.1002/AIC.15118
• HAKAN NIGAR ET AL: "Removal of VOCs at trace concentration levels from humid air by Microwave Swing Adsorption, kinetics and proper sorbent selection", SEPARATION AND PURIFICATION TECHNOLOGY, vol. 151, 1 September 2015 (2015-09-01), NL, pages 193 - 200, XP055973302, ISSN: 1383-5866, DOI: 10.1016/j.seppur.2015.07.019

- CHERBANSKI R ET AL: "Intensification of desorption processes by use of microwaves-An overview of possible applications and industrial perspectives", CHEMICAL ENGINEERING AND PROCESSING: PROCESS INTENSIFICATION, ELSEVIER SEQUOIA, LAUSANNE, CH, vol. 48, no. 1, 1 January 2009 (2009-01-01), pages 48 - 58, XP025716174, ISSN: 0255-2701, [retrieved on 20080116], DOI: 10.1016/J.CEP.2008.01.004
- WEBLEY PAUL A ET AL: "Microwave assisted vacuum regeneration for CO2capture from wet flue gas", ADSORPTION, SPRINGER US, NEW YORK, vol. 20, no. 1, 8 August 2013 (2013-08-08), pages 201 - 210, XP035375277, ISSN: 0929-5607, [retrieved on 20130808], DOI: 10.1007/S10450-013-9563-Y
- WURZBACHER JAN ANDRE ET AL: "Concurrent Separation of CO 2 and H 2 O from Air by a Temperature-Vacuum Swing Adsorption/Desorption Cycle", ENVIRONMENTAL SCIENCE & TECHNOLOGY, vol. 46, no. 16, 23 July 2012 (2012-07-23), US, pages 9191 - 9198, XP055950187, ISSN: 0013-936X, Retrieved from the Internet <URL:https://pubs.acs.org/doi/pdf/10.1021/es301953k> DOI: 10.1021/es301953k
- MCGURK STEPHEN J ET AL: "Microwave swing regeneration of aqueous monoethanolamine for post-combustion CO2capture", APPLIED ENERGY, ELSEVIER SCIENCE PUBLISHERS, GB, vol. 192, 14 February 2017 (2017-02-14), pages 126 - 133, XP029940353, ISSN: 0306-2619, DOI: 10.1016/J.APENERGY.2017.02.012
- CHRONOPOULOS THEODORE: "Microwave Swing Adsorption for post-combustion CO2 capture from flue gases using solid sorbents", THESIS, 1 July 2016 (2016-07-01), XP055901659, Retrieved from the Internet <URL:https://core.ac.uk/outputs/82971430> [retrieved on 20220315]
- STUCKERT NICHOLAS R. ET AL: "CO 2 Capture from the Atmosphere and Simultaneous Concentration Using Zeolites and Amine-Grafted SBA-15", ENVIRONMENTAL SCIENCE & TECHNOLOGY, vol. 45, no. 23, 9 November 2011 (2011-11-09), US, pages 10257 - 10264, XP055973142, ISSN: 0013-936X, DOI: 10.1021/es202647a
- CHRONOPOULOS THEODORE: "Microwave Swing Adsorption for post-combustion CO2 capture from flue gases using solid sorbents", THESIS, HERIOT-WATT UNIVERSITY, 1 July 2016 (2016-07-01), XP055901659, [retrieved on 20220315]
- WEBLEY PAUL A.; ZHANG JUN: "Microwave assisted vacuum regeneration for CO2capture from wet flue gas", ADSORPTION, SPRINGER US, NEW YORK, vol. 20, no. 1, 8 August 2013 (2013-08-08), New York, pages 201 - 210, XP035375277, ISSN: 0929-5607, DOI: 10.1007/s10450-013-9563-y

(52) Cooperative Patent Classification (CPC): (Cont.)
B01D 2253/25; B01D 2257/504; B01D 2258/06; B01D 2259/40094; Y02A 50/20; Y02C 20/40

**Description**

**FIELD OF THE INVENTION**

The present invention relates to methods, compositions and devices for efficiently capturing carbon dioxide from the atmosphere and regenerating the sorbents used to capture the carbon dioxide.

**BACKGROUND OF THE INVENTION**

Anthropogenic greenhouse gas emissions are the leading cause of global warming, with carbon dioxide as the primary contributor coming from both point sources and distributed emissions. While post-combustion carbon capture is an effective near-term mitigation strategy for combating carbon dioxide emissions, negative-carbon technologies must be employed in order to avoid excessive carbon dioxide emissions as one third of carbon dioxide emissions come from point sources and the scale-up of technologies for post-combustion carbon capture and storage are challenging and have progressed slowly.

Net emissions of carbon dioxide ($CO_2$) including not only household requirements met by energy services, transportation, land use, agriculture, but also industrial production is a critical component in stabilizing global mean temperature. Some energy services such as heating and cooling whether household or industrial in nature may be obtained by generating electricity from renewable energy sources. However, industrial processes that necessarily utilize and release carbon dioxide into the atmosphere present a problem with serious consequences. Additionally, carbon dioxide is a product used widely in industry for a wide variety of purposes such as in the food and beverage and agriculture sectors. HAKAN NIGARET AL: "Amine-functionalized mesoporous silica: A material capable of CO2 adsorption and fast regeneration by microwave heating", AICHE JOURNAL, JOHN WILEY & SONS, INC, US, vol. 62, no. 2, 15 December 2015 (2015-12-15), pages 547-555, XP071011574, ISSN: 0001-1541, DOI: 10.1002/AIC.15118 and HAKAN NIGAR ET AL: "Removal of VOCs at trace concentration levels from humid air by Microwave Swing Adsorption, kinetics and proper sorbent selection", SEPARATION AND PURIFICATION TECHNOLOGY, vol. 151, 1 September 2015 (2015-09-01), pages 193-200, XP055973302, NL ; ISSN: 1383-5866, DOI: 10.1016/j.seppur.2015.07.019 do explicitly disclose CO2 adsorption and desorption using microwave swing adsorption systems and methods.

**SUMMARY OF THE INVENTION**

The essential technical features of the present invention are explicitly defined in the wordings of independent claims 1, 4 and 10. Further technical features of the invention are explicitly defined in the wordings of the dependent claims.

In an embodiment of the present invention, removal of carbon dioxide from the atmosphere is carried out using DAC with a sorbent and release of the carbon dioxide using microwave (MW) irradiation to regenerate the sorbent. In an embodiment of the present invention, removal of carbon dioxide from the atmosphere is carried out using DAC with a poly amine sorbent and release of the carbon dioxide using microwave (MW) irradiation to regenerate the poly amine sorbent. In an embodiment of the present invention, removal of carbon dioxide from the atmosphere is carried out using DAC with a poly amine sorbent and release of the carbon dioxide using radio frequency (RF) irradiation to regenerate the poly amine sorbent. In an embodiment of the present invention, the poly amine sorbent can be polyethyleniemine (PEI). In an embodiment of the present invention, the PEI sorbents can be grafted or loaded onto solid supports. In an embodiment of the present invention, the solid supports can be cellulose acetate, gamma alumina, titania or functionalized cellulose acetate silica dioxide. In an alternative embodiment of the present invention, the poly amine sorbent can be branched PEI functionalized cellulose acetate silica dioxide sorbent material. In an embodiment of the present invention, the MW irradiation energy consumption can be monitored to optimize the time taken for efficient regeneration of the poly amine sorbent and thereby increase the removal of carbon dioxide. In an embodiment of the present invention, a MW swing technology utilizes laminar-flow contactors with solid-amine sorbents coupled with a MW swing desorption (MWSD) step. In an embodiment of the present invention, a continuous mechanism for moving the contactors through the MW desorption cavity can be employed. In an alternative embodiment of the present invention, a process for moving the resonant cavity and waveguide around the sorbent material can be employed.

**BRIEF DESCRIPTION OF THE DRAWINGS**

This invention is described with respect to specific embodiments thereof. Additional aspects can be appreciated from the Figures in which:

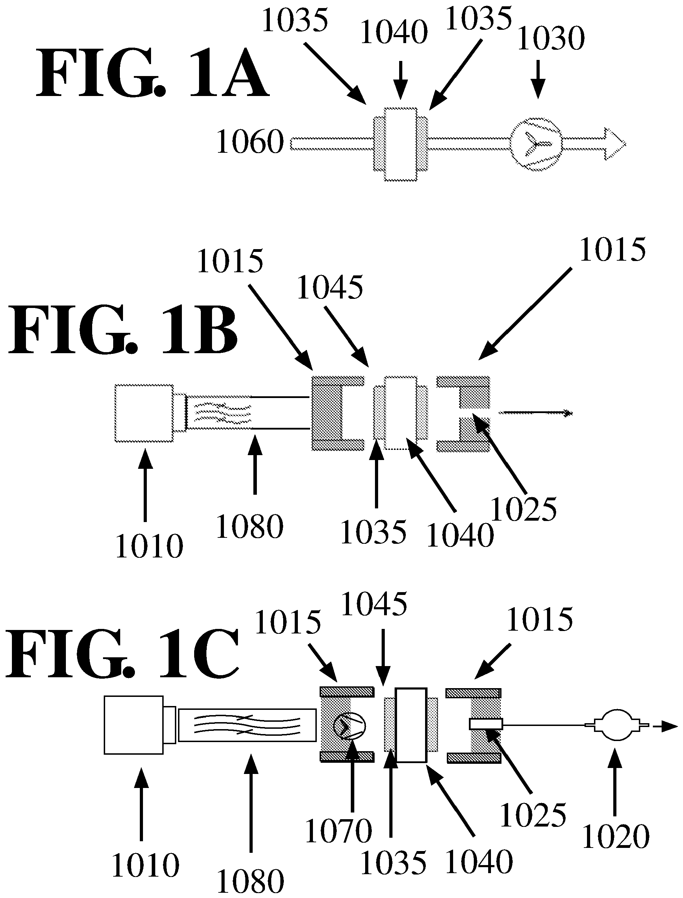

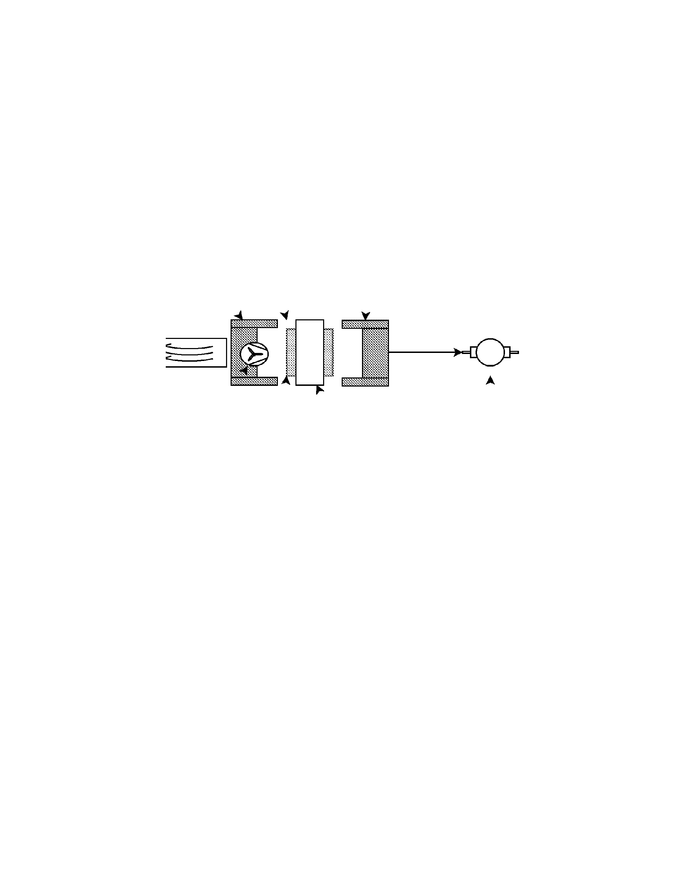

FIG. 1A is a schematic diagram showing one of a plurality of the holders 1040 with associated monolith contactors 1035 on which the sorbent is associated (not labelled) exposed to a laminar flow of air 1060 generated by a fan 1030, according to an embodiment of the invention;

**FIG. 1B** is a schematic diagram showing a holder 1040 with associated monolith contactors 1035 on which the sorbent is associated (not labelled) inserted through a gas sealable entrance 1045 into a resonant cavity 1015 in which a microwave or radio frequency source 1010 and a waveguide 1080 are used to irradiate the sorbent, where a vacuum port 1025 is used to evacuate carbon dioxide, according to various embodiments of the invention; and

**FIG. 1C** is a schematic diagram showing a holder 1040 with associated monolith contactors 1035 on which the sorbent is associated (not labelled) inserted through a gas sealable entrance 1045 into a resonant cavity 1015 in which a microwave or radio frequency source 1010, a waveguide 1080 and a tuning element 1070, are used to irradiate the sorbent, where a vacuum port 1025, vacuum pump 1020 evacuate carbon dioxide, according to various embodiments of the invention.

## DETAILED DESCRIPTION OF THE INVENTION

### Definitions

The transitional term "comprising" is synonymous with "including," "containing," or "characterized by," is inclusive or open-ended and does not exclude additional, unrecited elements or method steps.

The transitional phrase "consisting of" excludes any element, step, or ingredient not specified in the claim, but does not exclude additional components or steps that are unrelated to the invention such as impurities ordinarily associated with a composition.

The transitional phrase "consisting essentially of" limits the scope of a claim to the specified materials or steps and those that do not materially affect the basic and novel characteristic(s) of the claimed invention.

A metal comprises one or more elements consisting of lithium, beryllium, boron, carbon, nitrogen, oxygen, sodium, magnesium, aluminum, silicon, phosphorous, sulphur, potassium, calcium, scandium, titanium, vanadium, chromium, manganese, iron, cobalt, nickel, copper, zinc, gallium, germanium, arsenic, selenium, rubidium, strontium, yttrium, zirconium, niobium, molybdenum, technetium, ruthenium, rhodium, palladium, silver, cadmium, indium, tin, antimony, tellurium, cesium, barium, lanthanum, cerium, praseodymium, neodymium, promethium, samarium, europium, gadolinium, terbium, dysprosium, holmium, erbium, thulium, ytterbium, lutetium, hafnium, tantalum, tungsten, rhenium, osmium, iridium, platinum, gold, mercury, thallium, lead, bismuth, polonium, francium and radium.

A plastic comprises one or more of polystyrene, high impact polystyrene, polypropylene, polycarbonate, low density polyethylene, high density polyethylene, polypropylene, acrylonitrile butadiene styrene, polyphenyl ether alloyed with high impact polystyrene, expanded polystyrene, polyphenylene ether and polystyrene impregnated with pentane, a blend of polyphenylene ether and polystyrene impregnated with pentane or polyethylene and polypropylene.

A polymer comprises a material synthesized from one or more reagents selected from the group comprising of styrene, propylene, carbonate, ethylene, acrylonitrile, butadiene, vinyl chloride, vinyl fluoride, ethylene terephthalate, terephthalate, dimethyl terephthalate, bis-beta-terephthalate, naphthalene dicarboxylic acid, 4-hydroxybenzoic acid, 6-hyderoxynaphthalene-2-carboxylic acid, mono ethylene glycol (1,2 ethanediol), cyclohexylene-dimethanol, 1,4-butanediol, 1,3-butanediol, polyester, cyclohexane dimethanol, terephthalic acid, isophthalic acid, methylamine, ethylamine, ethanolamine, dimethylamine, hexamthylamine diamine (hexane-1,6-diamine), pentamethylene diamine, methylethanolamine, trimethylamine, aziridine, piperidine, N-methylpiperideine, anhydrous formaldehyde, phenol, bisphenol A, cyclohexanone, trioxane, dioxolane, ethylene oxide, adipoyl chloride, adipic, adipic acid (hexanedioic acid), sebacic acid, glycolic acid, lactide, caprolactone, aminocaproic acid, aziridine and or a blend of two or more materials synthesized from the polymerization of these reagents.

A 'contactor' is a crucible used to hold or contain the sorbent. In an embodiment of the present invention, the contactor is partially transparent to radio frequency or microwaves. In an alternative embodiment of the invention, the contactor contains specific covalently bound groups to allow absorption of specific radio frequency or microwaves. In an embodiment of the present invention, the contactor is fabricated from polytetrafluoroethylene (PTFE), polymers with low dielectric constants, alumina based ceramics, corundum, titanium based ceramics, zeolites, fused quartz or a ferrite to minimize absorption in the resonant cavity frequency. In an embodiment of the present invention, the contactor is fabricated from a porous ceramic. In an embodiment of the present invention, the porous ceramic is a silicate, an aluminosilicate, a diatomite, carbon, corundum, silicon carbide or cordierite. In an alternative embodiment of the present invention, the contactor can be cellulose acetate. In an alternative embodiment of the present invention, the contactor can be mesoporous silica. In an alternative embodiment of the present invention, the contactor is fabricated from a glass coated ferromagnetic. In an alternative embodiment of the present invention, the contactor is fabricated from $MnFe_2O$. In an alternative embodiment of the present invention, the contactor is PTFE impregnated with non aqueous hydroxyl group containing molecules. In another alternative embodiment of the present invention, the contactor is PTFE derivatized with hydroxyl groups.

A resonant cavity means a vessel suitable for carbon dioxide radio frequency and/or microwave desorption.

A sorbent is a material that is capable of forming a bond with carbon dioxide molecules present in air. The carbon dioxide molecules in a feed material that is to be processed are absorbed or adsorbed by the sorbent. In an embodiment of the invention, the feed material is atmosphere. In an embodiment of the present invention, the sorbent is a poly amine sorbent. In an embodiment of the present invention, the sorbent is a plastic impregnated with an amine. In an embodiment of the present invention, the sorbent is selected from the group consisting of linear PEI, branched PEI, linear PEI functionalized cellulose acetate silica dioxide, branched PEI functionalized cellulose acetate silica dioxide, PAA poly(allylamine) and PPI poly(propylenimine).

A gas sealable entrance means an opening that separates the outside (e.g., of a resonant cavity) from the inside, through which materials such as contactors can pass from one side to the other (e.g., when loading a resonant cavity with a contactor) which when sealed limits a plurality of gas molecules passing from one the inside to the outside. In an embodiment of the invention, a gas sealable entrance of a resonant cavity with an attached vacuum pump is able to maintain a vacuum differential pressure between the outside and inside of the gas sealable entrance of approximately 0.2 bar. In this range approximately means plus or minus thirty (30) per cent.

A cavity is tuned to provide uniform heating means heating through design of the geometrical dimensions of the processing cavity and may include the active manipulation of the electromagnetic standing waves through a variety of methods such as movement of a dielectric material through the cavity, stirring or moving a microwave absorptive material through the cavity.

Deployed means attached, affixed, adhered, inserted, or otherwise associated. A reservoir is a vessel used to contain one or more of a liquid, a gaseous or a solid sample.

In the following description, various aspects of the present invention will be described. However, it will be apparent to those skilled in the art that the present invention may be practiced with only some or all aspects of the present invention. For purposes of explanation, specific numbers, materials, and configurations are set forth in order to provide a thorough understanding of the present invention. However, it will be apparent to one skilled in the art that the present invention may be practiced without the specific details. In other instances, well-known features are omitted or simplified in order not to obscure the present invention.

Carbon-dioxide and $CO_2$ are used herein interchangeably.

Direct Air Capture (DAC) involves the removal and concentration of carbon dioxide from air and is regarded as an attractive and scalable carbon mitigation pathway strategy if carbon dioxide is geologically sequestered or up-converted into materials such as concrete, polymers and carbon fibers. DAC has the potential to achieving net negative emissions at the multi GT/y scale by the year 2050. However, the technologies, costs and process steps involved with DAC can limit its application to larger-scale embodiments that are not well-suited for market adoption requiring compression, liquefaction, storage and transportation of the carbon dioxide to the commercial customer. On-site production of carbon dioxide from DAC to existing industries that use carbon dioxide can decrease the costs of carbon dioxide to the customers and provide a more sustainable supply while meeting emission reduction targets/requirements.

DAC requires the contact of carbon dioxide from the air onto a sorbent followed by desorption of the carbon dioxide to collect the gas. There are two predominant methods for carbon dioxide capture currently in the state of commercialization or pre-commercialization - alkali aqueous solutions and amines. For each method, there is a preferred carbon dioxide release or extraction system. 'Steam stripping' systems supply the energy required to break an amine-carbon dioxide chemical bond when amines are used to capture the carbon dioxide. Amine systems are generally described in two categories: liquid amine contactors and solid amine contactors (including amine-tethered MOFs). However, amines can be degraded under oxidizing conditions and at elevated temperatures or in the presence of humidity or steam. Alkali liquid systems contact carbon dioxide from air to an aqueous alkaline solution to form carbonates which are then decomposed using heat to produce carbon dioxide requiring large capital and energy costs and do not lend themselves to applications that fit the merchant carbon dioxide market without transportation.

DAC requires the contact of carbon dioxide from the air onto a sorbent followed by desorption of the carbon dioxide to collect the gas. There are currently two predominant methods for carbon dioxide capture (i) absorption via alkali aqueous solutions and (ii) adsorption via chemisorption of amines or physisorption of zeolites. Alkali aqueous solution systems contact gaseous carbon dioxide (from air) with an aqueous alkaline solution to form carbonates, thereby removing the carbon dioxide from the air. The carbonates are then decomposed using heat to generate the carbon dioxide and regenerate the alkali solution. The process requires large capital costs and high energy costs. The process does not lend itself to applications that fit the merchant carbon dioxide market without transportation. Amine systems are generally described in two categories: liquid amine contactors and solid (polymeric) amine contactors, including amine-tethered Metal Organic Frameworks (MOFs). Solid polymeric amine systems are generally impregnated or grafted onto porous support structures such as silica, clays, zeolites and carbons. Polymeric amine DAC systems require $CO_2$ regeneration via heat (TSA thermal swing adsorption), pressure (VSA vacuum swing adsorption) or a combination (TVSA thermal vacuum swing adsorption).

$CO_2$ is useful to industry and DAC enables utilization of lower-cost and more sustainable supplies of $CO_2$ to existing and future markets. Additionally, $CO_2$ supplied from DAC can replace existing $CO_2$ sources used in industry that ultimately increase atmospheric $CO_2$ loading. DAC can be used meet emission reduction requirements of industry.

The first order considerations when designing DAC systems are a) the energy cost of contacting carbon dioxide with the sorbent, b) regeneration of the sorbent, and c) capital and maintenance cost of the system.

DAC requires moving large mass volumes of air through the sorbent contactor due to the low concentrations of CO2 in air. Therefore, the energy cost of contacting carbon dioxide via the movement of air dictates that low pressure-drop contactors such as laminar flow contactors are much preferred over alternative embodiments, as pressure drop and therefore energy consumption of laminar flow contact has a linear relationship to airspeed velocity, whereas turbulent flow increases with the square of air velocity and is therefore exponentially more costly. In the laminar flow contactor, carbon dioxide is driven towards the amine capture sites primarily via diffusion gradient perpendicular to the airflow, and secondarily due to shear forces present in laminar flow. Further, the pressure drop through the contactor is low enough so as not to contribute significantly to the overall cost of the process. Extruded monolithic contactors such as those used in catalytic converters of automobiles have excellent properties in as much as they maximize surface area per pressure drop enabling high mass transfer of carbon dioxide adsorption in the laminar flow regime.

Due to the fact that DAC requires contacting low concentrations of carbon dioxide from the air at high mass flow rates, higher airspeeds are preferred to maximize the amount of $CO_2$ captured in a given contactor volume. This requires an exponentially higher pressure drop and therefore energy cost. In the laminar flow regime inside the monolithic contactor, carbon dioxide is driven towards the amine capture sites primarily via a diffusion gradient which is perpendicular to the airflow, and secondarily due to shear forces present in laminar flow. Therefore a laminar flow regime contactor maximizes mass transfer while minimizing energy costs associated with active DAC. A laminar flow regime is additionally preferred over turbulent flow as the diffusion force for carbon dioxide capture happens quickly and is a driving force that does not require an additional energy input other than the movement of air in the laminar flow regime. **FIG. 1A** is a schematic diagram showing one of a plurality of the holders 1040 with associated monolith contactors 1035 on which the sorbent is associated (not labelled) exposed to a laminar flow of air 1060 generated by a fan 1030, according to an embodiment of the invention.

Desorption represents the largest energy cost for DAC, although an argument can be made that leveraging waste heat reduces desorption costs; however, this approach limits the market potential of DAC by requiring co-location with waste thermal heat sources.

Commercially available monolithic contactors maximize surface area per pressure drop enabling high mass transfer of carbon dioxide adsorption in the laminar flow regime. For DAC, carbon dioxide loading of the contactors is a function of airspeed, amine loading and breakthrough carbon dioxide efficiencies. Alternative laminar flow contactors with sufficient porosity are also suitable.

$$P = v_{air} * A * Pd * 1/Eff_{fan} \qquad \text{Equation 1}$$

Where P is the power (energy) requirement for movement of air through a contactor, v is the air velocity given in m/s, A is the contactor frontal surface area given in $m^2$, Pd is the pressure drop given in Pa ($J/m^3$) and Eff is the fan efficiency.

In an embodiment of the invention, by operating in the laminar flow regime a sorbent can achieve up to 80% carbon dioxide capture.

$$\dot{m}_{CO2} = \dot{m}_{air} * C_{CO2} = \rho_{air} * v * A * C_{CO2} \qquad \text{Equation 2}$$

Mass flow rate of carbon dioxide is given by the density of air $\rho_{air}$ at STP in $kg/m^3$, v is the velocity of air in $m^2/s$, A is the cross-sectional surface area of the contactor in $m^2$, $C_{co2}$ is the concentration of carbon dioxide in air (which is 0.04%).

$$\dot{m}_{CO2\,capture} = \dot{m}_{CO2} * Eff_{CO2} * D_{adsorption} \qquad \text{Equation 3}$$

Where $Eff_{co2}$ is up to 80%, and $D_{ads}$ is 90%. Therefore the mass of carbon dioxide capture is 6.5 kg/hr of carbon dioxide, which at 806W of power is 124.5 kWh/MT (448 kJ/kg) of carbon dioxide. Given the constraints of fan efficiencies and air concentrations of carbon dioxide, the primary ways to increase the energy efficiency of carbon dioxide capture via laminar flow contactors is to decrease pressure drop (unlikely) or increase the mass transfer of carbon dioxide which would require increasing $EFF_{CO2}$, $D_{ads}$ or $v_{air}$.

In an embodiment of the present invention, the poly amine sorbent can be linear polyethylenimine (PEI), branched PEI, aziridine, diethylenetriamine, triethylenetetramine, diethyleanetriamino organosilane, and aminopropyl organosilane. In an alternative embodiment of the present invention, the poly amine sorbent can be linear PEI functionalized cellulose acetate silica dioxide sorbent, branched PEI functionalized cellulose acetate silica dioxide sorbent material, linear PEI incorporated into a metal organic framework, branched PEI incorporated into a metal organic framework, and amine incorporated into a metal organic framework. In another alternative embodiment of the present invention, the poly amine sorbent can be a mesoporous material selected from the group consisting of M41S, FSM-16 and SBA-15 modified with amino groups such as polyethylene MCM-41, or 3-trimethoxysilylpropyl diethylenetriamine SBA-15. In an alternative embodiment of the present invention, alternative higher adsorption capacity sorbents and alternative contactor materials can be used with MWSD. For example, some amine-silica sorbent materials which are known to degrade to some extent in the presence of steam may be useful with the present invention where desorption is under sufficiently anhydrous conditions.

Conventional steam stripping technology employs a desorption mechanism which leverages a combination of vacuum and low-temperature steam to provide a rapid and reasonably efficient mechanism of carbon dioxide desorption while reducing the primary deactivation mechanism of oxidation of the amine at elevated temperatures. The adsorption energy for PEI has been measured to be about 94 kJ/mol, or 2,350 kJ/kg carbon dioxide. However, empirical data from commercially designed systems with multiple monoliths are reported to require about 5,000 kJ/kg carbon dioxide. Cooling of the monolith for cyclical adsorption occurs via the contactor wetted surfaces drying via airflow through dissipation of the contactor thermal mass lost to the environment. As a result, the latent energy of the desorption system thermal mass is difficult to recover, limiting overall system energy efficiency and exergy.

The heat of desorption is given by Equation 4 for traditional isothermal regeneration processes:

$$Q_r = \frac{1}{q_w} C_{p,s}(T_{de} - T_{ad}) + -\Delta H_a + \frac{Q_v F_{H2O}}{q_w} \qquad \text{Equation 4}$$

Where the regeneration heat $Q_r$ (kJ/kg carbon dioxide adsorbed), $q_w$ is the sorbent working capacity in wt% (typically between 8-10% for PEI), $C_{p,s}$ is the specific heat of adsorbent (kJ/kgK) around 1.81, $T_{de}$ is desorption temperature, $T_{ad}$ is adsorption temperature (typical delta around 60), and $H_a$ is the heat of adsorption (kJ/kg carbon dioxide) around 95, $Q_v$ is the vaporization heat of water at STP (2257.6 kJ/kg), $F_{H2O}$ is the moisture uptake from air in the sorbent, the latter two are dependent on relative humidity present during adsorption and hydrophilicity of the sorbent.

The total head of desorption is given by the Equation 5:

$$Q_{total} = (1 - \alpha)Q_r + (1 - \beta)Q_c + (1 - \gamma)Q_s \qquad \text{Equation 5}$$

Where $Q_c$ is the thermal energy required for the latent heat of the contactor ($C_{p,c}$ * dT) and $Q_s$ is the energy required for the remaining wetted system components. Thermal recovery is considered in the full system design wherein $Q_r > Q_s > Q_c$; however, the heat recovery efficiency of $Q_s >> Q_r$ & $Q_c$ due to evaporative cooling of the contactor and polymer.

The second law efficiency of the desorption step given by $H_a/Q_r$, and total second law efficiency is given by $(Ha + RT \ln (P/P_o)$ where P is the final pressure of pure carbon dioxide, $P_o$ is the initial partial pressure, R is the ideal gas constant and T is the working temperature.

Typical sorbent loading on the contactor is approximately 30-40 wt%. In this range approximately means plus or minus twenty (20) per cent. In conventional VSA and TVSA, system desorption components get larger and require more mass with increased contactor frontal surface area to provide structural stability for the reduced pressure of desorption which increases thermal mass, reducing thermal efficiency with larger contactor frontal surface area and increases overall capital and energy costs.

Radio Frequency Irradiation

Radio frequency (RF) irradiation includes radio waves and microwaves (MW). RF irradiation, is the oscillating electromagnetic irradiation in the frequency range of 20 kHz to 1 GHz. Typically, RF below approximately 1 GHz heats via ionic conduction, whereas above 1 GHz, MW heats via dipole heating. In an alternative embodiment of the present invention, RF irradiation at approximately 27.2 MHz, at room temperature will be used to excite the carbamate bond. In another embodiment of the present invention, RF irradiation at approximately 42 MHz at room temperature will be used to excite the carbamate bond. In another alternative embodiment of the present invention, RF irradiation at approximately 915 MHz at room temperature will be used to excite the carbamate bond. In this range approximately means plus or minus twenty per cent. In another alternative embodiment of the present invention, the substrate is heated indirectly (without directly exciting the bond) resulting in the excitation of the carbamate bond.

Microwave Irradiation

MW irradiation is electromagnetic irradiation in the frequency range of 1 GHz to 300 GHz. In an embodiment of the present invention, MW irradiation at approximately 2.45 GHz at room temperature will be used to excite the carbamate bond. In this range approximately means plus or minus twenty per cent. Domestic 'kitchen' MW ovens and the majority of dedicated MW reactors for chemical synthesis operate at a frequency of 2.45 GHz (which corresponds to a wavelength of 12.24 cm) to avoid interference with telecommunication and cellular phone frequencies. The energy of the MW photon in this frequency region (0.0016 eV) which is generally too low to break chemical bonds and is also lower than the energy of Brownian motion. Accordingly, microwave irradiation at 2.45 GHz frequency requires additional energy in order to induce chemical reactions. Typically, RF below approximately 1 GHz heats via ionic conduction, whereas above 1 GHz, MW heats via dipole heating coupling to the RF field.

MW heating occurs via direct molecular interactions with the MW radiation affording instantaneous and volumetric heating without the heat transfer restrictions and heat losses associated with conventional conductive or convective heating modes. Microwaves interact directly with the molecules of a reaction mixture transferring energy more rapidly and efficiently than convection techniques that rely on thermal conductivity where heat is transferred to the entire reactor assembly until the target desorption temperature is reached. Microwaves interact with molecules through two methods: dipole rotation and iconic conduction.

Microwave-enhanced chemistry is based on the efficient heating of materials by 'microwave dielectric heating' effects. This phenomenon is dependent on the ability of a specific material (solvent or reagent) to absorb MW energy and convert it into heat. The electric component of an electromagnetic field causes heating by two main mechanisms: dipolar polarization and ionic conduction. Irradiation of the sample at MW frequencies results in the dipoles or ions aligning in the applied electric field. As the applied field oscillates, the dipole or ion field attempts to realign itself with the alternating electric field and, in the process, energy is lost in the form of heat through molecular friction and dielectric loss. The amount of heat generated by this process is directly related to the ability of the matrix to align itself with the frequency of the applied field. If the dipole does not have enough time to realign, or reorients too quickly with the applied field, no heating occurs. The allocated frequency of 2.45 GHz used in all commercial systems lies between these two extremes and gives the molecular dipole time to align in the field, but not to follow the alternating field precisely.

In an embodiment of the present invention, a MW swing technology utilizes laminar-flow contactors with solid-amine sorbents coupled with the MWSD step. In an embodiment of the present invention, a continuous mechanism for moving the contactors through the MW desorption cavity can be employed. In an alternative embodiment of the present invention, a process for moving the resonant cavity and waveguide around the sorbent material can be employed.

The presence of moisture or any atmospheric hydration of the amine will resonate with MW energy thereby adding additional thermal energy to the sorbent-CO2 bond.

In practice MW heating generates standing waves based on the dimensions of the resonant cavity and frequency that are correlated with hot/high power spots, and cool/low power spots. In an embodiment of the present invention, by generating uniform heating/power distribution throughout the system near complete desorption of the carbon dioxide can be assured. As the carbamate bonds resonate within the field, the loss factor (tan $\delta$) will change until carbon dioxide desorption occurs, affecting the wave pattern.

In an embodiment of the present invention, the MW irradiation energy can be monitored to optimize the time taken for efficient regeneration of the sorbent and thereby increase productivity and efficiency of the carbon dioxide removal process. In an embodiment of the invention, a microwave generator can be coupled to a specifically designed resonant cavity for carbon dioxide desorption with a Class A/B amplifier which will operate as an oscillator when receiving feedback from the cavity to excite molecular oscillations in the sorbent. In an embodiment of the present invention, a fan field stirrer (wave stirrer or mechanical stirrer) will be used to modify the molecular oscillations in the carbon dioxide bound sorbent generated by the MW irradiation, which affects the standing wave patterns. In an embodiment of the present invention, a wave reflector will be used to modify the molecular oscillations in the carbon dioxide bound sorbent generated by the MW irradiation. In an alternative embodiment of the present invention, the microwave generator is adapted to allow scanning between variable frequencies to optimize the desorption process. In another alternative embodiment of the present invention, the microwave generator is adapted to allow pulse width modulation. In an embodiment of the present invention, the microwave generator can be used to ensure even heating in the desorption cavity allowing for rapid and complete carbon dioxide desorption with higher adsorption duty cycles and faster cooling, when compared to conventional heating. When presented with a mixture of different dielectrics, the microwaves will selectively couple to the higher dielectric loss component. In an embodiment of the invention, the system can be configured to self-frequency modulate enabling the device to automatically search out frequencies that maximize carbon dioxide desorption and direct the MW energy specifically into the desorption bond. In an unexpected result, MWSD can specifically target the enthalpy of desorption without heating a significant amount of contactor thermal mass in addition to the minimum energy required for desorption. **FIG. 1B** is a schematic diagram showing a holder 1040 with associated monolith contactors 1035 on which the sorbent is associated (not labelled) inserted through a gas sealable entrance 1045 into a resonant cavity 1015 in which a microwave or radio frequency source 1010, and a waveguide 1080 are used to irradiate the sorbent, where carbon dioxide is expelled through a vacuum port 1025. In an embodiment of the invention, the resonant cavity 1015 is adapted to move in relation to the holder 1040 in order to form a gas seal. Additionally, MW energy utilization requires low capital cost equipment, does not require water for convective heat transfer and is readily scalable. If water is present, it will couple to the field and heat. **FIG. 1C** is a schematic diagram showing a holder 1040 with associated monolith contactors 1035 on which the sorbent is associated (not labelled) inserted through a gas sealable entrance 1045 into a resonant cavity 1015 in which a microwave or radio frequency source 1010, a waveguide 1080 and a tuning element 1070, are used to irradiate the sorbent, where a vacuum port 1025, and a vacuum pump 1020 evacuate carbon dioxide. **FIG. 1A** is a schematic diagram showing one of a plurality of the holders 1040 with associated monolith contactors 1035 on which the sorbent is associated (not labelled) exposed.

As the applied field oscillates, the dipole or ion field attempts to realign itself with the alternating electric field and, in the process, energy is lost in the form of heat through molecular friction and dielectric loss. The amount of heat generated by this process is directly related to the ability of the matrix to align itself with the frequency of the applied field. If the dipole does not have enough time to realign, or reorients too quickly with the applied field, no heating occurs. The allocated frequency of 2.45 GHz used in most commercial systems lies between these two extremes and gives the molecular dipole time to align in the field, but not to follow the alternating field precisely.

The heating characteristics of a particular material (for example, a solvent) under MW irradiation conditions are dependent on its dielectric properties. The ability of a specific substance to convert electromagnetic energy into heat at a given frequency and temperature is determined by the so-called loss factor $\tan\delta$. This loss factor is expressed as the quotient $\tan\delta = \varepsilon''/\varepsilon'$, where $\varepsilon''$ is the dielectric loss, which is indicative of the efficiency with which electromagnetic radiation is converted into heat, and $\varepsilon'$ is the dielectric constant describing the ability of molecules to be polarized by the electric field. A reaction medium with a high $\tan\delta$ value is required for efficient absorption and, consequently, for rapid heating.

Maximum Power Point Tracking

In an embodiment of the present invention, Maximum Power Point Tracking (MPPT) can be used to optimize the structural arrangement of components between the MW source, the location of the contactors, the position of the sorbent and on the contactors, and the power density of the microwaves and the geometry of the microwaves. There are two components to the MPPT, instrumental feedback and software control which result in the ability to change the microwave power density and/or the geometry of the microwaves to provide more efficient heating of the sorbent. In an embodiment of the present invention, MPPT feedback between some sensor inside the device that can determine either a) how much energy is being absorbed by the sorbent, or b) that the EM field provides for even heating throughout the sorbent apparatus. In an embodiment of the present invention, MPPT feedback can be used to ensure desorption of the bonded carbon dioxide between a lower limit of approximately forty (40) per cent and an upper limit of approximately ninety (90) per cent and to optimize the experimental conditions of the desorption process. In this range approximately means plus or minus twenty (20) per cent.

The dominant DAC cost is associated with the sensible heat requirements of the monolith contactor

Commercially available extruded parallel channel monolith contactors impregnated with solid-amine sorbents have been shown to be a preferred embodiment for carbon dioxide adsorption from air due to their commercial availability, low pressure drop, high carbon dioxide capacity and cyclical stability. Key elements in designing a practical and commercial DAC process are (i) sorption capacity, (ii) sorption kinetics, (iii) low pressure drop, (iv) practical sorbent regeneration and (v) long sorbent lifetimes

PEI is the current preferred amine because has been found to be highly stable and maintains sufficient carbon dioxide adsorption capacity in the presence of repeated steam cycles up to 120 °C. However, the most commonly used amine-silica sorbent materials are known to degrade to some extent in the presence of steam. PEI is a widely commercially available material that can be manufactured at large scales and is available in a number of configurations with different chemical-physical properties, and can be manufactured using different methods including MW heating. Significant work has been done showing that parallel channel low pressure drop monoliths with high mesopore volumes and fully sorbing walls versus wash coats have been shown to be preferred. Many other sorbents with higher amine loading or carbon dioxide binding efficiencies have been tested with varying results to stability through repeated cycling at higher temperatures which does not lend itself to utilizing waste heat.

Several studies and empirical process data have shown that the dominant contribution in cost to adsorption-based DAC is associated with the sensible heat requirements of the monolith and the adsorbent, ranging from 50-70%, which are not easily recoverable in steam-regeneration monolithic processes.

Commercially-available corderite material has been shown to contribute significantly (25-45%) to the overall cost of the process largely due to its high specific heat capacity. The utilization of other mesoporous materials with lower specific heat capacities such as gamma-alumina has been the subject of significant development due to its Cp being approximately half of that for corderite (0.8 vs. 1.4 $Jg^{-1}K^{-1}$).

Significant work has been done on utilizing alternative materials such as gamma-alumina for the mesoporous contactor, MOFs, polymer hollow fiber sorbents and others.

In an embodiment of the invention, DAC embodiment utilizes low-cost low-pressure drop mesoporous contactors with commercially-available and stable amines and utilizes a desorption process that maximizes second law efficiencies and adsorption duty cycle. The proposed technology utilizes the preferred commercially available laminar-flow contactors (corderite and extruded mesoporous $\gamma$ - alumina parallel-channel monoliths) with commercially-available solid-amine sorbents coupled with a microwave-assisted desorption step. Due to the nature of the amine-carbon dioxide carbamate bond, the resultant carbamate exhibits a dipole and ionic charge which are directly excitable via electromagnetic fields present in MW radiation. Additionally, the contactor monoliths and carbon dioxide lean sorbents do not have strong dipole moments compared to the carbamate or sorbent-CO2 bond, and are therefore largely transparent to microwaves. Once the sorbent captures carbon dioxide, the resulting carbamate bond exhibits a dipole which resonates in the presence of the MW frequency electromagnetic field until the carbon dioxide is released. Once released, the sorbent has a significantly reduced dipole and a significantly reduced capacity to absorb energy. Therefore, a system can be designed such that the energy used during the desorption step can be used mainly for desorption, maximizing the second law efficiency of desorption and reducing the primary amine deactivation pathway of oxidation at higher temperatures.

In an embodiment of the invention, the key design requirements are: (i) sufficient mass transfer of carbon dioxide adsorption coupled with efficient desorption energy consumption and cycle times; (ii) laminar-flow regime to maximize mass transfer while minimizing energy costs associated with adsorption; and (iii) carbon dioxide adsorption via diffusion in a high mass air flow. The commercially-available monolithic contactors maximize surface area per pressure drop enabling high mass transfer of carbon dioxide adsorption in the laminar flow regime. The technology employs a desorption mechanism which leverages a combination of vacuum and low-temperature steam which together provide a mechanism of carbon dioxide desorption while reducing the primary deactivation mechanism of amine oxidation at regeneration temperatures.

In an embodiment of the invention, water can be added to the contactor prior to microwave desorption

While the systems, methods, and devices have been illustrated by describing examples, it is not the intention of the applicants to restrict or in any way limit the scope of the appended claims to such detail. It is, of course, not possible to describe every conceivable combination of components or methodologies for purposes of describing the systems, methods, and devices provided herein. Additional advantages and modifications will readily be apparent to those skilled in the art. Therefore, the invention, in its broader aspects, is not limited to the specific details, the representative system and method or device shown and described.

Thus, this application is intended to embrace alterations, modifications, and variations that fall within the scope of the appended claims. Furthermore, the preceding description is not meant to limit the scope of the invention. Rather, the scope of the invention is to be determined by the appended claims.

**Claims**

1. A method of capturing carbon dioxide molecules from air with contained release of carbon dioxide molecules comprising:

   (A) exposing a contactor (1035) in which a polyamine sorbent is associated with the contactor (1035) to a flow of air, wherein the flow of air is laminar, where a plurality of carbon dioxide molecules form a bond with the polyamine sorbent;
   (B) introducing the contactor (1035) into a resonant cavity (1015) comprising:

      (a) a gas sealable entrance adapted to seal the resonant cavity (1015) with the contactor (1035) inside the resonant cavity (1015);
      (b) a vacuum port (1025) in gaseous connection with a vacuum pump (1020); and
      (c) a microwave generator (1010) adapted to be electromagnetically connected to the resonant cavity (1015), where the microwave generator (1010) is adapted to select a microwave frequency to optimize breaking the bond with the polyamine sorbent;

(C) sealing the resonant cavity (1015);

(D) evacuating the sealed resonant cavity (1015);

(E) irradiating the polyamine sorbent with the selected microwave frequency to release the plurality of carbon dioxide molecules into the resonant cavity (1015); and

(F) removing the plurality of carbon dioxide molecules in the resonant cavity (1015) through the vacuum port (1025) using the vacuum pump (1020).

2. The method of Claim 1, where a moisture content of the resonant cavity (1015) in step (D) is reduced between:

a lower limit of approximately 10 per cent; and
an upper limit of approximately 80 per cent.

3. The method of Claim 1, where the flow of air is between:

a lower limit of approximately 0.5 $m^2$/s; and
an upper limit of approximately 10 $m^2$/s.

4. A continuous Direct Air Capture (DAC) device comprising:

a moving stage;
a plurality of contactors (1035) located on the moving stage;
a polyamine sorbent associated with each of the plurality of monolithic contactors (1035),
wherein the polyamine sorbent is capable to form a bond with a plurality of carbon dioxide molecules in the air;
a vacuum pump (1020);
an outlet, where the outlet is adapted to allow a laminar flow of air to pass over the polyamine sorbent associated with each of the plurality of monolithic contactors (1035),-a resonant cavity (1015) comprising:

one or both a sealable entrance and a sealable exit adapted to allow one or more of the plurality of contactors (1035) to enter the resonant cavity (1015) and to seal the resonant cavity (1015) containing the one or more of the plurality of contactors (1035);
a vacuum port in gaseous connection with the vacuum pump adapted to evacuate the sealed resonant cavity; and
a microwave generator (1010) adapted to be electromagnetically connected to the resonant cavity (1015), where the microwave generator (1010) is adapted to select a microwave frequency to optimize breaking the bond between the polyamine sorbent and the plurality of carbon dioxide molecules releasing the plurality of carbon dioxide molecules into the vacuum port, where the plurality of gaseous carbon dioxide molecules released by the microwave generator (1010) are removed from the resonant cavity (1015) through the vacuum port.

5. The continuous DAC device of Claim 4, where the microwave generator (1010) is adapted to vary the microwave frequency to optimize the desorption of the plurality of carbon dioxide molecules.

6. The continuous DAC device of Claim 4, where the microwave frequency is between:

a lower limit of approximately 0.9 GHz; and
an upper limit of approximately 1 GHz.

7. The continuous DAC device of Claim 4, where the microwave generator (1010) is adapted to optimize irradiation at frequencies between.

a lower limit of approximately 100 kHz ; and
an upper limit of approximately 1 GHz.

8. The continuous DAC device of Claim 4, where the vacuum pump (1020) reduces the pressure in the resonant cavity (1015) to between:

a lower limit of approximately 0.2 bar; and
an upper limit of approximately 0.8 bar.

9. The DAC device of Claim 4, where the polyamine sorbent is selected from the group consisting of linear polyethylenimine (PEI), branched PEI, aziridine, diethylenetriamine, triethylenetetramine, diethyleanetriamino organosilane, aminopropyl organosilane, linear PEI functionalized cellulose acetate silica dioxide sorbent, branched PEI functionalized cellulose acetate silica dioxide sorbent material, linear PEI incorporated into a metal organic framework, branched PEI incorporated into a metal organic framework, amine incorporated into a metal organic framework, polyethylene MCM-41, and 3-trimethoxysilylpropyl diethylenetriamine SBA-15.

10. A method of manufacture of carbon dioxide molecules from a continuous DAC device comprising introducing a laminar flow of air into a resonant cavity comprising

an entrance,
an exit,
a moving stage,
a contactor and
a polyamine sorbent associated with the contactor, where a plurality of carbon dioxide molecules present in the air covalently bond with the polyamine sorbent, and

irradiating the polyamine sorbent with microwave frequency generated by a microwave generator, where the microwave generator is adapted to select a microwave frequency to optimize breaking the bond between the polyamine sorbent and the plurality of carbon dioxide molecules releasing the carbon dioxide molecules.

**Patentansprüche**

1. Ein Verfahren zum Einfangen von Kohlendioxidmolekülen aus der Luft mit enthaltener Freisetzung von Kohlendioxidmolekülen, umfassend:

(A) Aussetzen eines Kontaktors (1035), in dem ein Polyaminsorptionsmittel mit dem Kontaktor (1035) verbunden ist, einem Luftstrom, wobei der Luftstrom laminar ist, wobei eine Vielzahl von Kohlendioxidmolekülen eine Bindung mit dem Polyaminsorptionsmittel bilden;
(B) Einbringen des Schützes (1035) in einen Resonanzhohlraum (1015), umfassend: (a) einen gasplombierbaren Eingang, der dazu ausgelegt ist, den Resonanzhohlraum (1015) mit dem Schütz (1035) innerhalb des Resonanzhohlraums (1015) abzudichten; (b) einen Vakuumanschluss (1025) in gasförmiger Verbindung mit einer Vakuumpumpe (1020); und (c) einen Mikrowellengenerator (1010), der dazu ausgelegt ist, elektromagnetisch mit dem Resonanzhohlraum (1015) verbunden zu sein, wobei der Mikrowellengenerator (1010) dazu ausgelegt ist, eine Mikrowellenfrequenz auszuwählen, um das Aufbrechen der Bindung mit dem Polyaminsorptionsmittel zu optimieren;
(C) Abdichtung des Resonanzhohlraums (1015); (D) Evakuieren des abgedichteten Resonanzhohlraums (1015);
(E) Bestrahlung des Polyaminsorptionsmittels mit der gewählten Mikrowellenfrequenz, um die Vielzahl von Kohlendioxidmolekülen in den Resonanzhohlraum (1015) freizusetzen; und
(F) Entfernen der Vielzahl von Kohlendioxidmolekülen in dem Resonanzhohlraum (1015) durch den Vakuumanschluss (1025) unter Verwendung der Vakuumpumpe (1020).

2. Verfahren nach Anspruch 1, wobei ein Feuchtigkeitsgehalt des Resonanzhohlraums (1015) in Schritt (D) reduziert wird zwischen: einer unteren Grenze von etwa 10 Prozent; und eine Obergrenze von etwa 80 Prozent.

3. Verfahren nach Anspruch 1, wobei der Luftstrom zwischen einer Untergrenze von etwa 0,5 m$^2$/s liegt; und einer Obergrenze von ca. 10 m$^2$/s.

4. Eine kontinuierliche Direct Air Capture (DAC)-Vorrichtung, umfassend: eine bewegliche Stufe;

eine Vielzahl von Schützen (1035), die sich auf der beweglichen Bühne befinden; ein Polyamin-Sorptionsmittel, das mit jedem der mehreren monolithischen Kontaktoren (1035) assoziiert ist, wobei das Polyamin-Sorptionsmittel in der Lage ist, eine Bindung mit einer Vielzahl von Kohlendioxidmolekülen in der Luft einzugehen;

eine Vakuumpumpe (1020); einen Auslass, wobei der Auslass so ausgelegt ist, dass ein laminarer Luftstrom über das Polyamin-Sorptionsmittel geleitet werden kann, das jedem der mehreren monolithischen Kontaktoren (1035) zugeordnet ist, ein Resonanzhohlraum (1015), der umfasst:

einen oder beide einen verschließbaren Eingang und einen verschließbaren Ausgang, der dazu ausgelegt ist, einem oder mehreren der mehreren Schütze (1035) zu ermöglichen, in den Resonanzhohlraum (1015) einzutreten und den Resonanzhohlraum (1015) abzudichten, der den einen oder mehrere der Vielzahl von Schützen (1035); eine Vakuumöffnung in gasförmiger Verbindung mit der Vakuumpumpe, die zur Evakuierung des abgedichteten Resonanzhohlraums geeignet ist; und

einen Mikrowellengenerator (1010), der dazu ausgelegt ist, elektromagnetisch mit dem Resonanzhohlraum (1015) verbunden zu sein, wobei der Mikrowellengenerator (1010) dazu ausgelegt ist, eine Mikrowellenfrequenz auszuwählen, um das Aufbrechen der Bindung zwischen dem Polyaminsorptionsmittel und der Vielzahl von Kohlendioxidmolekülen zu optimieren, die die Vielzahl von Kohlendioxidmolekülen in den Vakuumanschluss freisetzen, wo die Vielzahl von gasförmigen Kohlendioxidmolekülen, die durch den Mikrowellengenerator (1010) freigesetzt werden, aus dem Resonanzhohlraum entfernt werden (1015) durch den Vakuumanschluss.

**5.** Kontinuierliche DAC-Vorrichtung nach Anspruch 4, wobei der Mikrowellengenerator (1010) dazu ausgelegt ist, die Mikrowellenfrequenz zu variieren, um die Desorption der Vielzahl von Kohlendioxidmolekülen zu optimieren.

**6.** kontinuierliche DAC-Vorrichtung nach Anspruch 4, wobei die Mikrowellenfrequenz zwischen einer Untergrenze von etwa 0,9 GHz liegt; und eine Obergrenze von ca. 1 GHz.

**7.** Kontinuierliche DAC-Vorrichtung nach Anspruch 4, wobei der Mikrowellengenerator (1010) dazu ausgelegt ist, die Bestrahlung bei Frequenzen dazwischen zu optimieren. eine untere Grenze von etwa 100 kHz; und eine Obergrenze von ca. 1 GHz.

**8.** Kontinuierliche DAC-Vorrichtung nach Anspruch 4, wobei die Vakuumpumpe (1020) den Druck im Resonanzhohlraum (1015) auf eine untere Grenze von etwa 0,2 bar reduziert; und einer Obergrenze von ca. 0,8 bar.

**9.** DAC-Vorrichtung nach Anspruch 4, wobei das Polyamin-Sorptionsmittel ausgewählt ist aus der Gruppe bestehend aus linearem Polyethylenimin (PEI), verzweigtem PEI, Aziridin, Diethylentriamin, Triethylentetramin, Diethylentriamino-Organosilan, Aminopropyl-Organosilan, linearem PEI-funktionalisiertem Celluloseacetat-Siliciumdioxid-Sorptionsmittel, verzweigtem PEI-funktionalisiertem Celluloseacetat-Siliciumdioxid-Sorptionsmaterial, linearem PEI, das in ein metallorganisches Gerüst eingearbeitet ist, verzweigtem PEI, das in ein Metall eingearbeitet ist organisches Gerüst, Amin, das in ein metallorganisches Gerüst eingearbeitet ist, Polyethylen MCM-41 und 3-Trimethoxysilylpropyldiethylentriamin SBA-15.

**10.** Verfahren zur Herstellung von Kohlendioxidmolekülen aus einer kontinuierlichen DAC-Vorrichtung, umfassend das Einbringen eines laminaren Luftstroms in einen Resonanzhohlraum,

der einen Eingang,
einen Ausgang,
eine bewegliche Stufe,
ein Schütz und
ein mit dem Schütz assoziiertes Polyaminsorptionsmittel umfasst, wobei eine Vielzahl von Kohlendioxidmolekülen, die in der Luft vorhanden sind, kovalent mit dem Polyaminsorptionsmittel verbinden, und Bestrahlung des Polyamin-Sorptionsmittels mit einer Mikrowellenfrequenz, die von einem Mikrowellengenerator erzeugt wird, wobei der Mikrowellengenerator dazu ausgelegt ist, eine Mikrowellenfrequenz auszuwählen, um das Aufbrechen der Bindung zwischen dem Polyamin-Sorptionsmittel und der Vielzahl von Kohlendioxidmolekülen, die die Kohlendioxidmoleküle freisetzen, zu optimieren.

**Revendications**

**1.** Procédé de capture de molécules de dioxyde de carbone de l'air avec libération maîtrisée de molécules de dioxyde de carbone comprenant :

(A) l'exposition d'un contacteur (1035) dans lequel un sorbant polyamine est associé au contacteur (1035) à un flux d'air, le flux d'air étant laminaire, où une pluralité de molécules de dioxyde de carbone forment une liaison avec le sorbant polyamine ;

(B) l'introduction du contacteur (1035) dans une cavité résonnante (1015) comprenant :

(a) une entrée scellable aux gaz adaptée pour sceller la cavité résonnante (1015) avec le contacteur (1035) à l'intérieur de la cavité résonnante (1015) ;
(b) un orifice de vide (1025) en connexion gazeuse avec une pompe à vide (1020) ; et
(c) un générateur de micro-ondes (1010) adapté pour être connecté électromagnétiquement à la cavité résonnante (1015), où le générateur de micro-ondes (1010) est adapté pour sélectionner une fréquence de micro-ondes afin d'optimiser la rupture de la liaison avec le sorbant polyamine ;

(C) le scellement de la cavité résonnante (1015) ;
(D) la mise sous vide de la cavité résonante scellée (1015) ;
(E) l'irradiation du sorbant polyamine avec la fréquence de micro-ondes sélectionnée pour libérer la pluralité de molécules de dioxyde de carbone dans la cavité résonnante (1015) ; et
(F) l'élimination de la pluralité de molécules de dioxyde de carbone dans la cavité résonante (1015) par l'orifice de vide (1025) à l'aide de la pompe à vide (1020).

2. Procédé selon la revendication 1, où une teneur en humidité de la cavité résonante (1015) à l'étape (D) est réduite entre :
une limite inférieure d'environ 10 pour cent et une limite supérieure d'environ 80 pour cent.

3. Procédé selon la revendication 1, où le flux d'air est entre :

une limite inférieure d'environ 0,5 m$^2$/s ; et
une limite supérieure d'environ 10 m$^2$/s.

4. Dispositif de capture directe dans l'air (DAC) en continu comprenant :

un plateau mobile ;
une pluralité de contacteurs (1035) situés sur le plateau mobile ;
un sorbant polyamine associé à chacun de la pluralité de contacteurs monolithiques (1035), le sorbant polyamine étant capable de former une liaison avec une pluralité de molécules de dioxyde de carbone dans l'air ;
une pompe à vide (1020) ;
une sortie, où la sortie est adaptée pour permettre à un flux d'air laminaire de passer sur le sorbant polyamine associé à chacun de la pluralité de contacteurs monolithiques (1035), une cavité résonnante (1015) comprenant :

une entrée scellable et une sortie scellable, ou les deux, adaptées pour permettre à un ou plusieurs de la pluralité de contacteurs (1035) d'entrer dans la cavité résonante (1015) et pour sceller la cavité résonante (1015) contenant les un ou plusieurs de la pluralité de contacteurs (1035) ;
un orifice de vide en connexion gazeuse avec la pompe à vide, adapté pour mettre sous vide la cavité résonnante scellée ; et
un générateur de micro-ondes (1010) adapté pour être connecté électromagnétiquement à la cavité résonante (1015), où le générateur de micro-ondes (1010) est adapté pour sélectionner une fréquence de micro-ondes afin d'optimiser la rupture de la liaison entre le sorbant polyamine et la pluralité de molécules de dioxyde de carbone libérant la pluralité de molécules de dioxyde de carbone dans l'orifice de vide, où la pluralité de molécules de dioxyde de carbone gazeux libérées par le générateur de micro-ondes (1010) sont éliminées de la cavité résonante (1015) à travers l'orifice de vide.

5. Dispositif CAD en continu selon la revendication 4, où le générateur de micro-ondes (1010) est adapté pour faire varier la fréquence de micro-ondes afin d'optimiser la désorption de la pluralité de molécules de dioxyde de carbone.

6. Dispositif DAC en continu selon la revendication 4, où la fréquence de micro-ondes est entre : une limite inférieure d'environ 0,9 GHz ; et
une limite supérieure d'environ 1 GHz.

**7.** Dispositif DAC en continu selon la revendication 4, où le générateur de micro-ondes (1010) est adapté pour optimiser l'irradiation à des fréquences entre

une limite inférieure d'environ 100 kHz ; et
une limite supérieure d'environ 1 GHz.

**8.** Dispositif DAC en continu selon la revendication 4, où la pompe à vide (1020) réduit la pression dans la cavité résonante (1015) à entre :
une limite inférieure d'environ 0,2 bar ; et une limite supérieure d'environ 0,8 bar.

**9.** Dispositif DAC selon la revendication 4, où le sorbant polyamine est choisi dans le groupe constitué par la polyéthylèneimine (PEI) linéaire, la PEI ramifié, l'aziridine, la diéthylènetriamine, la triéthylènetétramine, le diéthylènetriamino-organosilane, l'aminopropylorganosilane, le sorbant dioxyde de silicium acétate de cellulose fonctionnalisé par PEI linéaire, le matériau sorbant dioxyde de silicium acétate de cellulose fonctionnalisé par PEI ramifié, le PEI linéaire incorporé dans une ossature métallo-organique, le PEI ramifié incorporé dans une ossature métallo-organique, une amine incorporée dans une ossature métallo-organique, le polyéthylène MCM-41 et la 3-triméthoxysilylpropyl diéthylènetriamine SBA-15.

**10.** Procédé de fabrication de molécules de dioxyde de carbone à partir d'un dispositif DAC en continu comprenant l'introduction d'un flux laminaire d'air dans une cavité résonante comprenant

une entrée,
une sortie,
un plateau mobile,
un contacteur et
un sorbant polyamine associé au contacteur, où une pluralité de molécules de dioxyde de carbone présentes dans l'air se lient de manière covalente au sorbant polyamine, et l'irradiation du sorbant polyamine avec une fréquence de micro-ondes générée par un générateur de micro-ondes, où le générateur de micro-ondes est adapté pour sélectionner une fréquence de micro-ondes afin d'optimiser la rupture de la liaison entre le sorbant polyamine et la pluralité de molécules de dioxyde de carbone libérant les molécules de dioxyde de carbone.

FIG. 1A

FIG. 1B

FIG. 1C

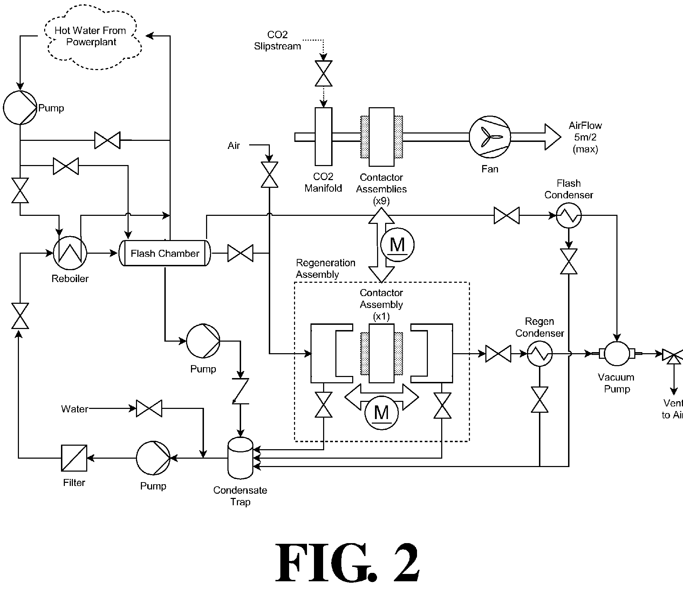

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Amine-functionalized mesoporous silica: A material capable of CO2 adsorption and fast regeneration by microwave heating. **HAKAN NIGARET AL.** AICHE JOURNAL. JOHN WILEY & SONS, INC, 15 December 2015, vol. 62, 547-555

- **HAKAN NIGAR et al.** Removal of VOCs at trace concentration levels from humid air by Microwave Swing Adsorption, kinetics and proper sorbent selection. *SEPARATION AND PURIFICATION TECHNOLOGY,* 01 September 2015, vol. 151, ISSN 1383-5866, 193-200